Europäisches Patentamt

European Patent Office

Office européen des brevets

(19)

(11) EP 0 186 753 B1

(12) EUROPEAN PATENT SPECIFICATION

(45) Date of publication and mention
of the grant of the patent:
**07.02.1996 Bulletin 1996/06**

(51) Int Cl.6: **G02B 6/44**

(21) Application number: 85114013.7

(22) Date of filing: **01.11.1983**

(54) **Optical fibre transmission lines**

Optisches Kabel

Câble optique

(84) Designated Contracting States:
**AT BE CH DE FR GB IT LI LU NL SE**

(30) Priority: **08.11.1982 GB 8231840**
**08.04.1983 GB 8309671**

(43) Date of publication of application:
**09.07.1986 Bulletin 1986/28**

(62) Application number of earlier application in
accordance with Art. 76 EPC: **83306636.8**

(73) Proprietor:
**BRITISH TELECOMMUNICATIONS public
limited company
London EC1A 7AJ (GB)**

(72) Inventors:
• **Reeve, Michael Harry
Ipswich, Suffolk (GB)**
• **Cassidy, Stephen Anthony
Ipswich, Suffolk (GB)**

(74) Representative:
**Roberts, Simon Christopher et al
London, WC1E 6BA (GB)**

(56) References cited:
**AU-A- 37 076         DE-A- 2 625 892
DE-A- 2 854 581       DE-A- 3 000 109
GB-A- 2 086 607       US-A- 4 105 284
US-A- 4 185 809       US-A- 4 248 035**

• **E.C.O.C 83 P239FF**

**Description**

This invention relates to optical fibre transmission lines.

Optical fibre cables carrying optical fibre transmission lines have heretofore been installed by the same methods as conventional metal conductor cables, those methods usually involving pulling the cable with a pulling rope through a previously laid cable duct. Frequently the cable duct already contains one or more conventional cables at the time of installing the optical fibre cable.

Unlike the metal conductors of a conventional cable, the optical fibres are easily damaged by tensile stress. Such stress may, for example, propagate micro-cracks, leading to fibre breakage in the long term. It is, therefore, standard practice to reinforce optical fibre cables by providing a central strength member, usually one or more steel tension wires, about which the optical fibres are disposed. The strength member takes up, and thus increases the ability of the cable to withstand, tensile stresses accompanying installation of the cable.

Unfortunately, the central strength member usually provides insufficient protection against local stresses caused by pulling a further cable through the same duct. The conventional approach of installing at the outset optical fibre cables containing sufficiently large numbers of optical fibres to satisfy foreseeable future traffic demands is a way of overcoming this problem. In consequence, first time installation of optical fibre cables containing dozens or even hundreds of optical fibres are currently envisaged despite the fact that to begin with a small fraction of the installed fibres would provide ample traffic carrying capacity. A further reason for installing optical fibre cables of comparatively large dimension is that the smaller the cross-section of the cable the more prone the cable becomes to wedging in between those cables already present in the duct.

The first time installation of large diameter optical fibre cables with high numbers of optical fibres, is, however, undesirable for a variety of reasons. Firstly, there are problems of a technical nature inherent in such cables, such as for example the difficulty of forming joints and of achieving the required high strength-to-weight ratios. Secondly, there are clear economical drawbacks in committing large resources to install intially unused fibre capacity, particularly in view of the comparatively recent origins of optical fibre technology which lead one to expect continued substantial reductions in the price and improvement in the quality of optical fibres. Thirdly, there is the serious risk of damaging in a single incident very large numbers of expensive optical fibres and, finally, there is an appreciable loss in flexibility when routing high density optical fibre transmission lines.

A method of installing optical fibres with pulling ropes and pull chords is described in "Sub-ducts: The Answer to Honolulu's Growing Pains", Herman S L Hu and Ronald T Miyahara, Telephony, 7 April 1980, pp 23 to 35. The installation method described there proceeds as follows: A section of existing 4-inch (100mm) duct is rodded and thereafter between one and three individual 1-inch (25mm) polyethylene tubes are inserted into the duct using pulling ropes. The polyethylene tubes form sub-ducts into which an optical fibre cable can be pulled with the aid of a nylon pull chord which has previously been inserted into the sub-duct by means of a parachute attached to its leading end and pushed through the subduct with compressed air.

The method just referred to does deal with some of the problems discussed above, but only to a very limited extent. Thus, it enables fibre capacity to be increased in up to three stages, and separates the optical fibre cables from those cables already in the duct, thereby greatly reducing the likelihood of jamming, and hence overstressing, of the optical fibre cable.

The method of installing optical fibre transmission lines which is described and claimed in EP-B-108590 (of which this patent is a divisional) is comparatively simple and yet flexible and economical.

In a first aspect the present invention provides an optical fibre member for blown installation comprising one or more optical fibres each protected by a primary coating and contained in an outer envelope, wherein said outer envelope has an outer surface textured or shaped to increase the fluid drag experienced by the member during installation thereof.

It will be appreciated that to generate sufficient fluid drag to propel the fibre member, the gaseous medium has to be passed through the pathway with a flow velocity much higher than the desired rate of advance.

The terms "lightweight and flexible" in respect of the optical fibre member are to be understood as meaning "sufficiently lightweight and flexible" for the fibre member to be propelled by the fluid drag.

Whether the fibre member is sufficiently lightweight and flexible and the flow velocity sufficiently high is readily determinable by a simple trial and error experiment, guided, if necessary, by the theoretical model discussed below.

The flow velocity of the gaseous medium may be steady or may be suitably varied, for example either between a first velocity producing no, or insufficient, fluid drag to propel the fibre member, and a second velocity producing sufficient fluid drag to propel the fibre member, or between a first and a second velocity both producing sufficient fluid drag for propelling the fibre member. Conveniently the variations in velocity take the form of repeated abrupt changes between the first and second velocity.

The aforementioned variations in flow velocity may include periods during which the flow is reversed with respect to the desired direction of advance of the fibre member.

It is to be understood that more than one fibre member may be propelled along the same tubular pathway.

A fibre member may, for example, comprise a single optical fibre, protected by at least a primary coating but preferably contained within an outer envelope. Alternatively, a fibre member may comprise a plurality of optical fibres contained within a common envelope.

The envelope may be loosely or tightly surrounding the fibre or fibres.

The method may be used for insertion of an optical fibre member into, or its withdrawal, from the pathway.

The gaseous medium is chosen to be compatible with the environment in which the invention is performed, and in ordinary environments will be a non-hazardous gas or gas mixture.

With the proviso about compatibility with the environment, the gaseous medium is preferably air or nitrogen.

The tubular pathways and/or the fibre members are conveniently but not necessarily of circular cross-section, and the fibre member is always smaller than the pathway.

In practice the pathway internal diameter will generally be greater, and frequently much greater than 1mm, and the external diameter of the fibre member greater than 0.5mm.

A preferred range of diameters for the pathway is 1 to 10mm, conveniently between 3 and 7mm, and a preferred range of diameters for the fibre members is 1 to 4mm, although much larger diameters may be used provided the fibre member is sufficiently lightweight and flexible. The diameter of the fibre members is preferably chosen to be greater than one tenth, and conveniently to be about one half of the pathway diameter or greater (and appropriately less, of course, if more than one fibre member is to be propelled through the same pathway).

Insertion of a fibre member by means of the fluid drag of a gas passing over the fibre member has several advantages over methods involving pulling an optical fibre cable with a pull cord.

Firstly, the extra step of providing a pull cord is elimated.

Secondly, using the fluid drag of a gaseous medium produces a distributed pulling force on the fibre member. This is particularly advantageous if the installation route contains one or more bends. If, as would be the case with a pulling cord, the pulling force were concentrated at the leading end of the fibre member, any deviation of the pathway from a straight line would greatly increase friction between the fibre member and the internal walls of the pathway, and only a few bends would be sufficient to cause locking of the fibre member. The distributed pulling force produced by the fluid drag, on the other hand, enables bends to be negotiated fairly easily, and the number of bends in a given installation is no longer of much significance.

Thirdly, the fluid drag substantially reduces overall pulling stress on the fibre member and so permits the fibre member to be of relatively simple and cheap construction.

Furthermore, because the fibre member is not subjected to any substantial pulling stress during installation, little allowance, if any, needs to be made for subsequent relaxation.

According to a second aspect of the present invention, there is provided. A method of advancing a lightweight and flexible optical fibre member as claimed in claim 14.

Installing optical fibre transmission lines by the method of EP-B-108590 and of the invention has several advantages over conventional techniques.

Firstly, since the conduit is installed without containing any optical fibres, conventional rope pulling and similar techniques may be freely employed for installing the conduit.

Secondly, the capacity of a transmission line can readily be adapted to requirements. Thus, while initially only one or two fibre members may be sufficient to carry the traffic the conduit may contain a much larger number of ductlets than are required at the time of installation, and further fibre members may be inserted later on as and when needed. The conduit of the present invention is cheap compared to the cost of the fibres, and spare ductlets to accommodate further fibres as and when extra capacity is required can thus be readily incorporated without adding more than a small fraction to overall costs.

The method of EP-B-108590 and of the invention also permits the installation of improved later generations of optical fibre transmission lines. It is possible, for example, to install at first one or more fibre members incorporating multimode fibres, and at a later date add, or replace the installed multimode fibre members with fibre members incorporating monomode fibres. Installed fibre members may conveniently be withdrawn from the ductlet, and replacement fibre members be inserted by using the aforesaid method of propelling by fluid drag of a gaseous medium.

In a third aspect, the present invention provides an optical fibre cable structure comprising an installed ductlet within which is loosely received at least one optical fibre member according to the first or second aspect.

The conduit may be rigid or flexible.

Where the conduit includes more than one ductlet, the ductlets are conveniently formed by bores in the material of the conduit. The term "bore", like the word "tubular" is understood in this context to include circular and other suitable shapes of cross-sectional area.

Alternatively, the conduit may comprise a plurality of individual tubes enveloped by a common outer sheath.

It will be appreciated that the present invention largely avoids the risk, inherent in handling optical fibre cables with a large number of fibres, of accidentally damaging before or during installation in a single event a large number of expensive optical fibres.

The present invention also enables the installation of continuous optical fibres over several installation lengths without joints.

Furthermore, individual fibre members routed through the conduit can be routed, without requiring fibre joints, into different branch conduits at junction points.

The present invention will now be explained further by way of example and with reference to the accompanying drawings of which;

| | |
|---|---|
| Figure 1 | is a cross section through a conduit suitable for implementing the invention; |
| Figures 2 and 3 | are relatively enlarged cross-sections through fibre members; |
| Figure 4 | is a schematic diagram of apparatus for inserting fibre members into ductlets by fluid drag; |
| Figure 5 | is a schematic drawing of a junction between a trunk and a branch conduit; |
| Figure 6 | is a schematic diagram to illustrate notation used in drag force calculations; |
| Figure 7 | is a schematic section of a modified drive unit; and |
| Figure 8 | is a graph of drag force vs pressure. |

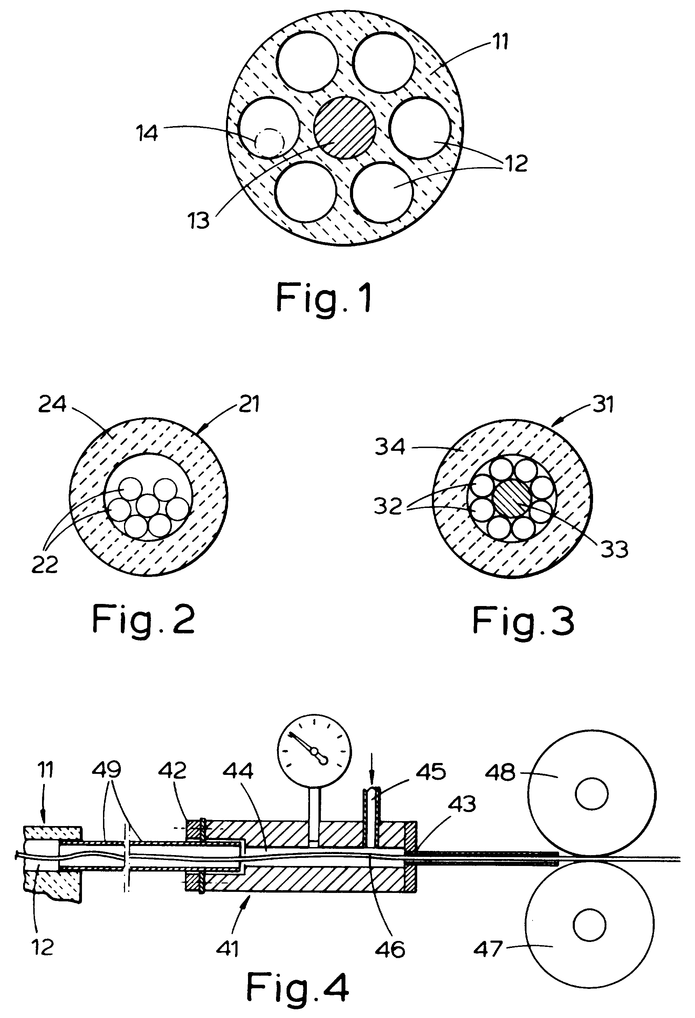

Referring first to the Figure 1, there is shown a conduit 11 incorporating six ductlets 12, one of which contains a fibre member 14, and a core 13.

The conduit 11 is made of extruded polymer or other suitable material, the ductlets, or bores, 12 being formed in the conduit during its extrusion. The central core 13 contains copper wire pairs required for testing operations during and after installation, repeater supervision, power supply, and the like. Alternatively, or additionally, the core 13 may incorporate reinforcements, for example tension wires, to take up the tension forces during installation of the conduit.

Where required, the conduit may be surrounded by a water barrier (not shown).

The copper wire pair for testing can be omitted from the core 13 if suitable alternative testing facilities are available, such as, for example testing methods using optical fibres inserted subsequently into the conduit as described below.

Figure 2 is a cross-section through a fibre member 21 which is in a form particularly suited for installation by fluid drag. The fibre member 21 comprises several optical fibres 22 lying loosely in a polymer sheath 23. In view of the virtual absence of any pulling stress during installation of a fibre member by fluid drag, the fibre member 21 does not require reinforcement. The relatively simple construction also leads to lower production costs, as well as making the fibre member 21 comparatively light, thereby enabling easy installation by fluid drag.

In certain circumstances it may be desirable to provide a reinforced fibre member, and Figure 3 is a cross-section through such a fibre member 31 which, provided it is made light enough and flexible enough, is suitable for insertion by fluid drag into a ductlet 12 of the conduit 11 of Figure 1. The fibre member 31 consists of a plurality of optical fibres 32 arranged round a strength member 33 and enclosed in a polymer sheath 34..

The installation of an optical transmission line proceeds as follows:

The flexible conduit 11 is installed into an existing duct (not shown) by conventional methods such as pulling with a pulling rope.

Because the conduit 11 does not contain any optical fibres at this stage, the conduit 11 can be handled in the same way as an ordinary cable, and no special care needs to be taken over and above that customary in installing conventional metal conductor cables. If required, it is also possible at this stage, that is before the conduit contains any optical fibres, to pull a further conduit through the duct to provide spare capacity.

Furthermore, since the conduit can readily be made of an external diameter matching that of cables already in the duct, wedging is less likely to occur than with a standard, smaller diameter optical fibre cable.

Once installed, optical fibre members such as 21 and 31 shown in Figure 2 or 3 are inserted into as many of the ductlets 12 as is required.

Instead of the afore-described fibre members 21 and 31 of near circular cross-section, the fibre members may, for example, be so-called ribbons, in which a thin, wide sheath encloses an optical fibre or a plurality of optical fibres lying in the same plane.

Manufacture of the conduit 11 is cheap compared to the optical fibres in the fibre members 21 or 31 which it is designed to carry, and spare ductlets 12 for future expansion can readily be incorporated at the extrusion stage of the conduit 11 without adding unduly to the overall cost. The conduit may be manufactured by adapting conventional cable manufacturing processes such as, for example, extrusion.

A gas flowing past the surface of a solid object produces a drag force which largely depends on the velocity of the gas relative to the surface. The Applicants have found that this drag force can be made sufficiently large to pull a lightweight optical fibre member 21, or 31 into a tubular pathway such as, for example, a ductlet 12 of the aforementioned conduit 11.

In experiments, the flow velocity, or the flow rate, of air through a given pathway has been found to depend approximately linearly on the pressure difference between opposite ends of the pathway, with the slope of the dependency indicating that flow at useful flow rates is predominantly turbulent.

For a given pressure difference, the flow rate varies with the size of the free cross sectional area of the bore, while the drag force on a fibre member present in a bore varies with the flow rate and the surface area of the fibre member. The drag force has been optimised in experiments by varying these parameters and, in particular, by choosing an appropriate ratio of bore diameter to fibre member diameter.

Experiments have been performed using a bore diameter of 7mm. The optimum fibre member diameter for this bore size has been found to lie between 2.5 and 4mm. A pressure below 80 p.s.i. (approximately 5.6 kgs/cm$^2$), usually about 40 p.s.i. has been found sufficient to insert fibre members of up to 3.5 gram per metre (gr/m) over lengths of 200 metres. A fibre member with 2 gr/m is easily installed over this length.

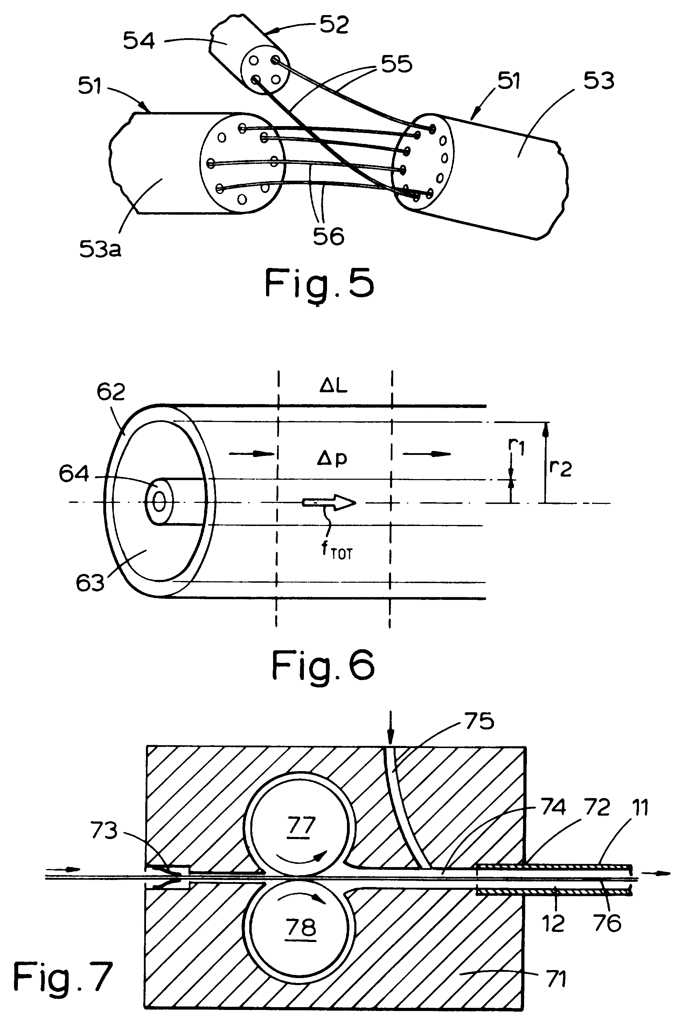

The theoretical value for the drag forces for these dimensions has been calculated in the manner described below with reference to Figure 6 to be 2.5 gr/m. Lower practical values are believed to be due to the tendency of the fibre members 21, 31 to acquire "set" while on the supply reel. This set would appear to force the fibre member 21, 31 against the wall of the bore 12, thereby increasing friction.

Suitable texturing or shaping of the fibre member surface leads to drag forces higher than those presently experienced.

It should be noted here that using fluid drag to insert fibre members into tubular pathways differs significantly from the method described in the above mentioned article of inserting pull cords by means of parachutes. The parachute is propelled by the pressure difference between the air in front of and the air behind the parachute, and the velocity of the air relative to the advancing cord is only minimal and the pulling force is localised at the point of attachment of the parachute. In contrast, using fluid drag requires a relatively high flow of fluid relative to the surface of the fibre members.

Also, unlike the use of parachutes or potential other methods of inserting fibre members into the tubular pathways, using fluid drag produces a uniformly distributed pulling force on the fibre member. This reduces the strain on the optical fibres within the fibre member to very low values.

In ordinarily pulling a fibre member through a bend enclosing an angle e, the tension of the leading end, $T_2$ is related to the tension $T_1$ at the trailing end $T_2/T_1 = e^{\mu\theta}$ where $\mu$ is the coefficient of friction. Even a small number of bends in the pathway may therefore result in an unacceptably high force being required at the leading end if locking of the fibre member is to be avoided. In contrast, the distributed pulling force produced by fluid drag is applied evenly along the fibre member, including in bends, and permits a large number of bends to be easily and speedily negotiated without any undue stress on the fibre member.

Figure 4 illustrates apparatus for feeding fibre members into tubular pathways such as the ductlets 12 of the conduit 11 of Figure 1. The apparatus consists of a feedhead 41 which contains a straight bore 44 connected at one end, its outlet end 42, to a flexible tube 49, and at the other end, its inlet end 43, to a supply reel (not shown). The head 41 also contains an inlet 45 for air. The outlet end 42 and the bore 44 are substantially larger in cross sectional area than fibre member 46. The aperture of the inlet end 43 is only slightly larger in cross sectional area than that of the fibre member 46. This arrangements forms an air block which presents a relatively large flow resistance to air and helps prevent air escaping through the inlet duct 43. The tube 49 is inserted into one of the ductlets of the conduit 11. Suitable seals between the feedhead 41 and the tube 49, and the tube 49 and the ductlet 12 prevent undesirable escape of the air.

In use the fibre member 46 is fed into the inlet end 43 of the feedhead 41 by means of a pair of rubber drive wheels 47 and 48, driven by a constant torque driving mechanism (not shown). Air is fed into the bore 44 through the air inlet 45 and hence is directed through the tube 49 into the ductlet 12. The optical fibre member 46 is pushed through the inlet end 43 of the feedhead into the bore 44 and onwards into the tube 49. Pushing of the fibre member 46 continues until the surface area of the fibre member which is exposed to the air flow is sufficiently large to produce a drag force to cause the further advance of the fibre member 46 through the tube 49 and the ductlet 12, while the rate of feed is controlled by means of the aforementioned rubber drive wheels 47 and 48.

Figure 5 shows a branching connection between an optical fibre trunk line 51 and a branch line 52, each comprising a conduit 53 and 54 respectively and one or more fibre members 55 and 56. Since, as described above, the fibre members are individually inserted into the ductlets of the trunkline conduit 53, individual fibre members 55 can be routed from the trunk conduit 53 into the branch conduit 54 as required, while other fibre members 56 continue to the adjacent section 53a of the trunkline conduit.

Referring now also to Figure 6, the drag force on the fibre member 64 within the bore 63 of a ductlet, or tube, 62 on account of turbulent air flow through the bore 63 can be calculated as discussed below.

These calculations show that what has been called fluid drag or drag force above is, in fact, a composite force, of which the major proportion is normally due to viscous drag, and at least one other important component due to a hydrostatic force, f' below. It will be appreciated that the exact composition of the drag force does not affect the principles of the invention but the more detailed analysis below can be used to optimise the parameters involved in carrying out the invention, and to obtain some guidance for trial and error experiments.

The pressure difference between the tube ends can be equated to a shear force distributed over the inner surface of the bore 63 and the outer surface of the fibre member 64. Thus, one has, for a small element of length $\Delta l$ producing a pressure drop $\Delta p$

$$\Delta p \pi \, (r_2^2 - r_1^2) = F \tag{1}$$

where $r_2$ = outer tube bore radius, $r_1$ = inner tube radius and F is the viscous drag force on the inner and outer walls of the elemental length.

If is it now assumed that the force F is distributed evenly over the area of the inner and outer walls, that is to say the external wall of the fibre member and the internal wall of the ductlet respectively, the drag force, f, on the fibre member per unit length is:-

$$f = \frac{F}{\Delta l} \left[ \frac{2\pi r_1}{2\pi(r_1 + r_2)} \right] = \frac{\Delta p \pi r_1 (r_2 - r_1)}{\Delta L} \tag{2}$$

which gives, in the limit, the drag force on the fibre member per unit length,

$$f = \pi r_1 (r_2 - r_1) \frac{dp}{dl} \tag{3}$$

In addition, we must consider the force produced by the pressure difference acting on the cross-sectional area of the fibre member. This is locally proportional to the pressure gradient and therefore is distributed over the installed length of the fibre member in the same way as the viscous drag force, leading to an additional force

$$f' = \frac{\Delta p}{\Delta l} \, \pi \, r_1^2 \tag{4}$$

giving a total force per unit length of

$$f_{TOT} = \frac{dp}{dt} \pi r_1 r_2 \tag{5}$$

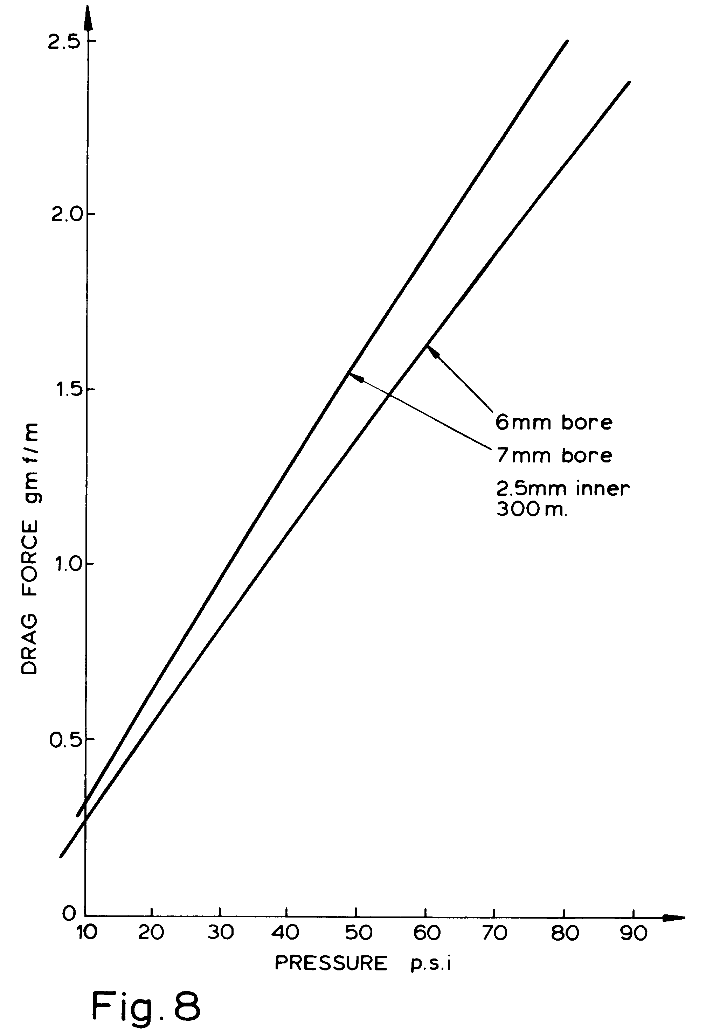

In order to get an initial estimate of this it is assumed that the pressure drops linearly over the length of the bore, whether filled by the fibre member or not. Equation 5 is then plotted, for the case of the 6mm bore diameter with 2.5mm O.D. fibre member, in Figure 8, for a length of 300m. Since pressure is normally quoted in psi it has been retained here for the sake of convenience.

Coefficients of friction of around 0.5 have been measured for the polyethylene and polypropylene fibre members against a polyethylene bore wall. Therefore, with a fibre member weighing 3gms/m we could expect to install a 300m length with around 55 psi pressure. Any extra drag force over that required to overcome friction would appear at the start end as a gradually increasing tension in the fibre member as installation proceeds.

Figure 7 shows in diagrammatic form the arrangement of the modified drive unit discussed with reference to Figure 4, in which the only major change lies in incorporating the drive wheels 77 and 78 within the feedhead 71.

As the foregoing discussion with reference to Figure 6 has illustrated, the viscous drag force is accompanied by a hydrostatic force, the force f' of equation 5 above. This force f' has been found to oppose the insertion of the fibre member into the drive unit, making the incorporation of the drive wheels 77 and 78 into the drive unit preferable. The force f', referred above as the hydrostatic potential must be overcome when introducing the fibre member into the pressurised areas. The drive wheels would be driven by a torque just sufficient to overcome this potential.

The drive wheels are incorporated into the pressurised cavity 74 and thus the force on the fibre member necessary to overcome the hydrostatic potential is tensile. If the wheels were outside the drive unit, this force would be compressive, and there would be tendency for the fibre member to buckle.

For convenience the drive unit may be made to split along the fibre member axis, and perpendicular to the diagram, or in some other plane. The air seals 72, 73 may be, for example, rubber lips, or narrow channels.

In operation, a fibre member 76 fed into the drive unit would be automatically taken up by the drive wheels with just enough force to overcome the hydrostatic potential, and fed on along the ductlet 12. The fluid drag of the air flowing down the ductlet 12 causes the fibre member 76 to be pulled along the ductlet 12 as the installation proceeds. This means that such a drive unit can be placed between two adjoining sections of conduit so that a fibre member emerging from a ductlet in the first conduit can be fed into the appropriate ductlet of the second. Thus, an installation could consist of a fibre member 76 running through a number of conduits using two or more drive units in tandem, possibly without supervision.

It will be appreciated that it is possible to blow compounds in liquid or powder form along the ductlet prior to, or during installation in order to provide lubrication for the fibre members. Powdered talc is an example of a suitable lubricant.

The ductlets may, for example, also be formed in a power cable, or in a conventional subscriber line, to allow subsequent installation of optical fibre members. In the latter case, to avoid ingress of water, the ductlet may be sealed until the time of installation of the fibre members.

**Claims**

1. An optical fibre member (14) for blown installation comprising one or more optical fibres (22, 32) each protected by a primary coating and contained in an outer envelope (24, 34), wherein said outer envelope has an outer surface textured or shaped to increase the fluid drag experienced by the member during installation thereof.

2. An optical fibre member as claimed in claim 1, wherein the outer envelope tightly surrounds said one or more fibres.

3. An optical fibre member as claimed in claim 1 or claim 2, including a strength member (23).

4. An optical fibre member as claimed in claim 1, the member having no reinforcement member.

5. An optical fibre member as claimed in any one of the preceding claims, having an external diameter of at least 1mm.

6. An optical fibre member as claimed in claim 5, having an external diameter in the range lmm to 4mm.

7. An optical fibre member (14) as claimed in claim 6 having an external diameter $(2r_1)$ in the range 2. 5 to 4 mm.

8. An optical fibre member (14) as claimed in claim 5 having an external diameter $(2r_1)$ of 4mm or more.

9. An optical fibre member (14) as claimed in any one of the preceding claims wherein the member consists of a plurality of optical fibres (22, 32), a common outer envelope (24, 34) surrounding said plurality of fibres.

10. An optical fibre member as claimed in any one of the preceding claims wherein the member weighs not more than 3. 5g $m^{-1}$.

11. An optical fibre member as claimed in any one of the preceding claims wherein the or each optical fibre (22, 32) is a monomode optical fibre.

12. An optical fibre member (14) for blown installation comprising one or more optical fibres (22, 32) each protected by a primary coating and contained in an outer envelope (24, 34) which tightly surrounds said one or more fibres, said one or more fibres being substantially constrained against movement within said envelope, wherein the fibre member has a weight of not more than 3. 5g $m^{-1}$ and is sufficiently light and flexible for a 200 metre length to be installable along a 200 metre polyethylene duct having a bore diameter $(2 r_2)$ of 7mm by distributed fluid drag of a gaseous medium passing over the fibre member at a high average relative flow velocity resulting from application of said gaseous medium to said duct and wherein said outer envelope has an outer surface textured or shaped to increase the fluid drag experienced by the member during installation thereof.

13. An optical fibre member as claimed in claim 12 wherein the member is installable with said gaseous medium applied to said duct at a pressure of not more than 552 KPa (80psi).

14. A method of advancing a lightweight and flexible optical fibre member comprising one or more optical fibres in a pre-installed duct said fibre member having an outer envelope which has an outer surface textured or shaped to increase fluid drag and said method comprising passing a gas along the duct in the direction of the desired motion of the fibre member with a velocity substantially greater than the desired rate of advance of the fibre member whereby the distributed viscous drag forces act on the surface of the fibre member within the duct so as to advance the fibre member within the duct.

15. A method of advancing an optical fibre member as claimed in claim 14, wherein the ratio of the external diameter of the fibre member and the inner diameter of the duct is between 0. 35 and 0.56 to 1.

16. A method of advancing an optical fibre member as claimed in claim 14 or claim 15, wherein the fibre member has a diameter of at least 4mm.

17. A method of advancing an optical fibre member as claimed in any one of claims 14 to 16, wherein the fibre member contains a strength member.

18. An optical fibre cable structure comprising an installed ductlet within which is loosely received at least one optical fibre member according to any one of claims 1 to 12.

**19.** A cable structure as claimed in claim 18, the ductlet containing a lubricant used during the installation of the fibre member.

**20.** A cable structure claimed in claim 18 or claim 19 comprising a flexible conduit in which a plurality of ductlets are formed as bores in the material of the conduit.

**21.** A cable structure as claimed in claim 20 wherein the conduit is formed of extruded polymeric material, the bores having been formed during the extrusion of the conduit.

**22.** A cable structure as claimed in claim 18 or claim 19 comprising a conduit comprising a plurality of individual tubes enveloped by a common outer sheath.

**23.** A cable structure as claimed in any one of claims 18 to 22 wherein the or each ductlet has an internal diameter of 10 mm or less.

**24.** A cable structure as claimed in claim 23 wherein the or each ductlet has an internal diameter in the range of 3 to 7 mm.

**25.** A cable structure as claimed in any one of claims 18 to 24 wherein the ductlets are formed of polyethylene.

**26.** A cable structure as claimed in any one of claims 18 to 25 in the form of a power cable.

**27.** A cable structure as claimed in any one of claims 18 to 25 which is substantially devoid of reinforcement.

**28.** A cable structure as claimed in any one of claims 18 to 27 which is over 200 metres in length.


**Patentansprüche**

**1.** Lichtwellenleiterelement (14) zur Blasverlegung, das einen oder mehrere Lichtwellenleiter (22, 32) umfaßt, die jeweils durch eine Primärbeschichtung geschützt und in einem Außenmantel (24, 34) angeordnet sind, wobei der Außenmantel eine Außenfläche aufweist, die derart texturiert oder geformt ist, daß die Mitnahme durch das Fluid verstärkt wird, das auf das Element bei der Verlegung einwirkt.

**2.** Lichtwellenleiterelement nach Anspruch 1, wobei der Außenmantel eine oder mehrere Leiter eng umschließt.

**3.** Lichtwellenleiterelement nach Anspruch 1 oder Anspruch 2, das ein Armierungsselement (23) umfaßt.

**4.** Lichtwellenleiterelement nach Anspruch 1, wobei das Element kein Verstärkungselement aufweist.

**5.** Lichtwellenleiterelement nach einem der vorhergehenden Ansprüche, das einen Außendurchmesser von mindestens 1 mm aufweist.

**6.** Lichtwellenleiterelement nach Anspruch 5, das einen Außendurchmesser im Bereich von 1 bis 4 mm aufweist.

**7.** Lichtwellenleiterelement (14) nach Anspruch 6, das einen Außendurchmesser ($2r_1$) im Bereich von 2,5 bis 4 mm aufweist.

**8.** Lichtwellenleiterelement (14) nach Anspruch 5, das einen Außendurchmesser ($2r_1$) von 4 mm oder darüber aufweist.

**9.** Lichtwellenleiterelement (14) nach einem der vorhergehenden Ansprüche, wobei das Element aus mehreren Lichtwellenleitern (22, 32) und einem gemeinsamen Außenmantel (24, 34) besteht, der die mehreren Lichtwellenleiter umschließt.

**10.** Lichtwellenleiterelement nach einem der vorhergehenden Ansprüche, wobei das Element nicht mehr als 3,5 g/m wiegt.

11. Lichtwellenleiterelement nach einem der vorhergehenden Ansprüche, wobei der oder jeder Lichtwellenleiter (22, 32) ein Ein-Moden-Lichtwellenleiter ist.

12. Lichtwellenleiterelement (14) zur Blasverlegung, das einen oder mehrere Lichtwellenleiter (22, 32) umfaßt, die jeweils durch eine Primärbeschichtung geschützt und in einem Außenmantel (24, 34) angeordnet sind, der einen oder mehrere Leiter eng umschließt, wobei der eine oder die mehreren Leiter im Mantel im wesentlichen derart eingeschnürt ist/sind, daß eine Bewegung nicht möglich ist, wobei das Lichtwelleneiterelement ein Gewicht von maximal 3,5 g/m aufweist, und für einen Leiter einer Länge von 200 m ausreichend leicht und flexibel ist, um in einem 200 m langen Polyethylen-Kabelkanal, der einen Bohrungsdurchmesser (2 $r_2$) von 7 mm aufweist, durch Mitnahme durch das verteilte Fluid eines gasförmigen Mediums verlegt zu werden, das über das Leiterelement mit einer hohen mittleren relativen Strömungsgeschwindigkeit strömt, die aus dem Einströmen des gasförmigen Mediums in den Kabelkanal resultiert, und wobei der Außenmantel eine Außenfläche aufweist, die so texturiert oder geformt ist, daß die Mitnahme durch das Fluid verstärkt wird, das auf das Element bei der Verlegung einwirkt.

13. Lichtwellenleiterelement nach Anspruch 12, wobei das Element mit Hilfe des gasförmigen Mediums verlegt werden kann, das in den Kabelkanal unter einem Druck von maximal 552 kPa (80 psi) einströmt.

14. Verfahren zur Vorwärtsbewegung eines leichten und flexiblen Lichtwellenleiterelements, das ein oder mehrere Lichtwellenleiter in einem vorverlegten Kabelkanal umfaßt, wobei das Leiterelement einen Außenmantel aufweist, der eine Außenfläche hat, die so texturiert oder geformt ist, daß die Mitnahme durch das Fluid verstärkt wird, und wobei das Verfahren umfaßt: Leiten eines Gases durch den Kabelkanal in der Richtung der gewünschten Bewegung des Leiterelements mit einer Geschwindigkeit, die im wesentlichen größer als die gewünschte Geschwindigkeit der Vorwärtsbewegung des Leiterelements ist, wodurch die verteilten viskosen Mitnahmekräfte auf die Oberfläche des Leiterelements innerhalb des Kabelkanals derart einwirken, daß das Leiterelement innerhalb des Kabelkanals vorwärtsbewegt wird.

15. Verfahren zur Vorwärtsbewegung eines Lichtwellenleiterelements nach Anspruch 14, wobei das Verhältnis des Außendurchmessers des Leiterelements und des Innendurchmessers des Kabelkanals zwischen 0,35 und 0,56 zu 1 ist.

16. Verfahren zur Vorwärtsbewegung eines Lichtwellenleiterelements nach Anspruch 14 oder 15, wobei das Leiterelement einen Durchmesser von mindestens 4 mm aufweist.

17. Verfahren zur Vorwärtsbewegung eines Lichtwellenleiterelements nach einem der Ansprüche 14 bis 16, wobei das Leiterelement ein Verstärkungselement aufweist.

18. Lichtwellenleiterkabelaufbau, der einen verlegten Kabelkanal umfaßt, in der mindestens ein Lichtwellenleiterelement gemäß einem der Ansprüche 1 bis 12 lose aufgenommen ist.

19. Kabelaufbau nach Anspruch 18, wobei der Kabelkanal ein Schmiermittel enthält, das bei der Verlegung des Leiterelements verwendet wird.

20. Kabelaufbau nach Anspruch 18 oder 19, der eine flexible Rohrleitung umfaßt, in der mehrere Kabelkanäle als Bohrungen im Material der Rohrleitung ausgeführt sind.

21. Kabelaufbau nach Anspruch 20, wobei die Rohrleitung aus einem extrudierten Polymermaterial hergestellt ist und die Bohrungen beim Strangpressen der Rohrleitung ausgebildet wurden.

22. Kabelaufbau nach Anspruch 18 oder 19, der eine Rohrleitung umfaßt, der mehrere einzelne Rohre enthält, die von einer gemeinsamen Außenhülle umgeben sind.

23. Kabelaufbau nach einem der Ansprüche 18 bis 22, wobei der Kabelkanal oder jeder Kabelkanal einen Innendurchmesser von 10 mm oder darunter aufweist.

24. Kabelaufbau nach Anspruch 23, wobei der Kabelkanal oder jeder Kabelkanal einen Innendurchmesser im Bereich von 3 bis 7 mm aufweist.

25. Kabelaufbau nach einem der Ansprüche 18 bis 24, wobei die Kabelkanäle aus Polyethylen hergestellt sind.

**26.** Kabelaufbau nach einem der Ansprüche 18 bis 25 in Form eines Stromkabels.

**27.** Kabelaufbau nach einem der Ansprüche 18 bis 25, der im wesentlichen keine Verstärkung aufweist.

**28.** Kabelaufbau nach einem der Ansprüche 18 bis 27, der mehr als 200 m lang ist.


**Revendications**

**1.** Élément (14) à fibres optiques destiné à être installé par soufflage, comprenant une ou plusieurs fibres optiques (22,32) protégées chacune par un revêtement primaire et contenues dans une enveloppe extérieure (24, 34), dans lequel ladite enveloppe extérieure possède une surface extérieure texturée ou conformée de manière à accroître la traînée du fluide appliquée à l'élément pendant son installation.

**2.** Élément à fibres optiques selon la revendication 1, dans lequel l'enveloppe extérieure entoure étroitement la ou lesdites fibres optiques.

**3.** Élément à fibres optiques selon la revendication 1 ou 2, comprenant un élément de rigidification (23).

**4.** Élément à fibres optiques selon la revendication 1, cet élément ne comportant aucun élément de renforcement.

**5.** Élément à fibres optiques selon l'une quelconque des revendications précédentes, possédant un diamètre extérieur égal à au moins 1 mm.

**6.** Élément à fibres optiques selon la revendication 5, possédant un diamètre extérieur situé dans la gamme de 1 mm à 4 mm.

**7.** Élément à fibres (14) optiques selon la revendication 6, possédant un diamètre extérieur $(2r_1)$ situé dans la gamme de 2,5 à 4 mm.

**8.** Élément à fibres (14) optiques selon la revendication 5, possédant un diamètre extérieur $(2r_1)$ de 4 mm ou plus.

**9.** Élément à fibres (14) optiques selon l'une quelconque des revendications précédentes, dans lequel l'élément est constitué par une pluralité de fibres optiques (22,32), une enveloppe extérieure commune (24,34) entourant ladite pluralité de fibres.

**10.** Élément à fibres (14) optiques selon l'une quelconque des revendications précédentes, dans lequel l'élément a un poids non supérieur à 3,5 g m$^{-1}$.

**11.** Élément à fibres (14) optiques selon l'une quelconque des revendications précédentes, dans lequel la ou chaque fibre optique (22,32) est une fibre optique monomode.

**12.** Élément (14) à fibres optiques destiné à être installé par soufflage comprenant une ou plusieurs fibres optiques (22,32), dont chacune est protégée par un revêtement primaire et est logée dans une enveloppe extérieure (24,34) qui enserre étroitement la ou lesdites fibres, la ou lesdites fibres étant essentiellement bloquées contre un déplacement à l'intérieur de ladite enveloppe, et dans lequel ledit élément à fibres possède un poids non supérieur à 3,5 g.m$^{-1}$ et est suffisamment léger et flexible pour qu'on puisse installer une longueur de 200 mètres le long d'un conduit en polyéthylène de 200 mètres possédant un perçage, dont le diamètre $(2r_2)$ est égal à 7 mm, sous l'effet de la traînée distribuée du fluide formé par un milieu gazeux circulant sur l'élément à fibres avec une vitesse d'écoulement moyenne relative élevée résultant de l'application dudit milieu gazeux audit conduit, et dans lequel ladite enveloppe extérieure possède une surface extérieure texturée ou conformée de manière à accroître la traînée du fluide appliquée à l'élément pendant son installation.

**13.** Élément à fibres optiques selon la revendication 12, dans lequel l'élément peut être installé avec application dudit milieu gazeux audit conduit avec une pression non supérieure à 552 kPa (80 psi).

**14.** Procédé pour faire avancer un élément à fibres optiques léger et flexible comprenant une ou plusieurs fibres optiques dans un conduit préalablement installé comportant une enveloppe extérieure, qui possède une surface extérieure texturée ou conformée pour accroître la traînée du fluide, et ledit procédé consistant à faire passer un gaz le long du conduit dans la direction de déplacement désiré de l'élément à fibres avec une vitesse nettement supérieure à la vitesse désirée d'avance de l'élément à fibres, les forces distribuées de traînée visqueuse agissant sur la surface de l'élément à fibres à l'intérieur du conduit.

15. Procédé pour faire avancer un élément à fibres optiques selon la revendication 14, dans lequel le rapport du diamètre extérieur de l'élément à fibres et le diamètre intérieur du conduit est compris entre 0,35 et 0,56 à 1.

16. Procédé pour faire avancer un élément à fibres optiques selon la revendication 14 ou 15, selon lequel l'élément à fibres possède un diamètre égal à au moins 4 mm.

17. Procédé pour faire avancer un élément à fibres optiques selon l'une quelconque des revendications 14 à 16, selon lequel l'élément à fibres contient un élément de rigidification.

18. Structure de câble à fibre optique comprenant un tube secondaire allongé, dans lequel est logé de façon lâche au moins un élément à fibres optiques selon l'une quelconque des revendications 1 à 10.

19. Structure de câble selon la revendication 18, dans lequel le tube secondaire contient un lubrifiant utilisé pour l'installation de l'élément à fibres.

20. Structure de câble selon la revendication 18 ou 19, comprenant un conduit flexible dans lequel une pluralité de tubes sont formés sous la forme de perçages du matériau du conduit.

21. Structure de câble selon la revendication 20, dans lequel le conduit est formé d'un matériau polymérique extrudé, les perçages ayant été formés au cours de l'extrusion du conduit.

22. Structure de câble selon la revendication 18 ou 19, comprenant un conduit comportant une pluralité de tubulures individuelles enveloppées par une gaine extérieure commune.

23. Structure de câble selon l'une quelconque des revendications 18 à 22, dans laquelle le ou chaque tube possède un diamètre intérieur de 10 mm ou moins.

24. Structure de câble selon la revendication 23, dans laquelle le ou chaque tube possède un diamètre intérieur de l'ordre de 3 à 7 mm.

25. Structure de câble selon l'une quelconque des revendications 18 à 24, dans laquelle les tubes sont formés de polyéthylène.

26. Structure de câble selon l'une quelconque des revendications 18 à 25 sous la forme d'un câble d'alimentation.

27. Structure de câble selon l'une quelconque des revendications 18 à 25, qui sont sensiblement excemptes de tout élément de renforcement.

28. Structure de câble selon l'une quelconque des revendications 18 à 27, qui possède une longueur supérieure à 200 mètres.

...

Fig. 1

Fig. 2

Fig. 3

Fig. 4

Fig. 5

Fig. 6

Fig. 7

Fig. 8